# EUROPEAN PATENT APPLICATION

(11) **EP 0 948 896 A1**
(43) Date of publication of application: **13.10.1999**
(21) Application number: 98302821.8
(22) Date of filing: 09.04.1998
(51) Int. Cl.: A23C 13/16, A23L 1/19

(54) **Confectionary cream containing probiotic microorganisms**

(71) Applicant: QUEST INTERNATIONAL B.V., 1411 GP Naarden (NL)
(72) Inventor: The designation of the inventor has not yet been filed
(74) Representative: Humphries, Martyn

(57) **Abstract**

The invention relates to confectionary creams which are W/O or O/W emulsions and which contain viable probiotic microorganisms. The creams have Aw of 0.50-0.95 and preferably contain 5-60% w/w of water, 10-70% w/w of fat and 0.01 or more of a food grade emulsifier. The invention also concerns bakery products comprising the creams.

## Description

The invention relates to creams for confectionary products, particularly bakery products, which contain probiotics and have long shelf life.

Probiotics are generally considered to be a valuable addition to the human diet because they have a beneficial effect on health. The term "probiotic" is used in the art for various microorganisms which when ingested are generally assumed to have a favourable effect on human gut flora. These microorganisms are generally of the lactic acid producing type and some are actually used for fermenting milk to produce yogurt. Well known examples are: lactobacilli such as *L. acidophilus, L. bulgaricus, L. helveticus* and *L. casei, Streptococcus thermophilus, Bifidobacteria* and specific strains of *Enterococcus faecium*.

Thus far such probiotics are generally consumed in milk products, particularly fermented milk products such as yoghurt. Such products have a limited shelf life and are intended for consumption typically within a few days or weeks after production.
DE-A-38 22 082 describes a creamy and spreadable product obtained from high fat milk which is inoculated with a microorganism mixture containing a ratio of 80% mesophilic and 20% thermophilic lactic acid bacteria. After fermentation the product is subjected to ultrafiltration, salt and cream is added and the product homogenized and aseptically packed in sterile containers. Alternatively the product is mixed with savory-type food products such as salmon, tunafish, olives, paprika, tomato and the like. Typically the product has a salt content of 0.7% w/w.

Creams for confectionary products known in the art are either fat-based and virtually water free, or they are of the emulsion type, comprising a fat phase and an aqueous phase such as the low fat W/O creams described in WO 95/24831. They are required to have longer shelf lives than most dairy products and confectionary and bakery products are not generally packed sterile. They are intended to be sweet products and therefore a high salt content is generally undesirable. So far few such products containing probiotics are known in the art. EP-A-0 666 031 describes creams for industrial confectionary containing viable lactobacilli such as L. acidophilus, L. bulgaricus and S. thermophilus. These creams have Aw in the range of 0.30-0.50, preferably 0.30-0.35. Thus, they contain a large amount of fat, typically around 50% w/w. This is undesirable from a dietetic point of view.

The invention therefore provides confectionary creams containing probiotic microorganisms and having relatively high Aw.

The invention further provides confectionary creams having low salt content which are suitable for sweet confectionary products, particularly bakery products.

The invention still further provides confectionary creams which have long shelve life.

The invention also provides bakery products containg the creams according to the invention.

Thus, the invention provides confectionary creams, particularly bakery creams, which comprise a fat phase and an aqueous phase and thus are emulsions, particularly O/W (oil in water) or W/O (water in oil) emulsions, and which comprise viable probiotic microorganisms.

The creams generally comprise fat in an amount of at least 10% by weight of the total cream, preferably at least 20%, more preferably at least 25%. The maximum fat content is, however, not more than 70% by weight of the total cream, preferably not more than 50%, more preferably not more than 45%. The term fat is understood to comprise fats which are solid as well as fats which are liquid at ambient temperature (i.e. oils) and mixtures thereof. The fat may be of animal origin, e.g. butter fat, or it may be of vegetable origin.

The water content of the creams is generally at least 5% by weight, preferably at least 10%, more preferably at least 15%, The water content is, however, not more than 60%, preferably not more than 45%, particularly not more than 35%.

The creams according to the invention have Aw of more than 0.50, preferably they have Aw of at least 0.55. Generally the Aw is not more than 0.95, preferably not more than 0.90. They have a salt content of not more than 0.5% by weight of the total cream, preferably 0.25% or less.

The creams according to the invention further comprise emulsifiers necessary to obtain a stable emulsion. Such emulsifiers should be food grade. Such emulsifiers are known in the art and the choice may dependent on whether a W/O or an O/W emulsion is desired. The emulsifiers are generally present in a amount of at least 0.01% by weight, preferably at least 0.05%, more preferably at least 0.1%.

Preferred probiotic microorganisms belong to *L. acidophilus, L. bulgaricus, L. helveticus, L. casei, Streptococcus thermophilus, Bifidobacteria* and *Enterococcus faecium*. The concentration of viable probiotic microorganisms should be at least 10⁴ CFU/g (colony forming units/g), preferably at least 10⁵ CFU/g of cream at the time of consumption. A content of 10⁶ CFU/g is desirable.

Additionally the creams may comprise components to improve their organoleptic properties, such as sugars, particularly mono- and/or disaccharides (up to 60% by weight, preferably not more than 45%, also preferably at least 5%), and flavours. They may also comprise components to improve mouth feel and/or texture and/or nutritive value. Some components may perform several of these functions at the same time. Examples of such components are: (low fat) milk powder and/or yoghurt powder (up to 40% by weight, preferably at least 5%), gelling agents such as gelatin, agar and the like, thickening agents such as various vegetable or microbial gums, starch derivatives and other polycarbohydrates and the like.

For bakery products intended to be stored at ambient temperature it may advantageous to have the cream contain some ethanol in an amount of 2% by weight or less, preferably 1% or less.

The creams according to the invention are suitable for confectionary products, particularly bakery products such as cake bars, cake rolls, sponge, pastry e.g. puff pastry and choux pastry, filled biscuits and the like. They may be used as filling or as outer layer and the specific properties of the creams may be adapted to suit the particular application. The creams have excellent sensory properties and due to their content of viable probiotic microorganisms are also valuable from a nutritional point of view. They may be whipped to obtain an aerated cream if desired.

The creams according to the invention may be stored for at least 5 months at 7°C. For bakery creams with Aw of 0.8 or higher, and bakery products containing such creams, it is generally recommended in the art that they be stored below 10°C. Bakery creams with Aw below 0.8 may be stored at ambient temperature and such bakery creams according to the invention may be stored for at least 3 months.

To further enhance the useful nutritive properties of the creams they may be made to contain various fat- and/or water-soluble nutritionally valuable components such as vitamins, physiologically active antioxidants (e.g. natural carotene mixtures), various vegetable extracts and the like.

The bakery products containing the creams according to the invention have increased nutritive value due to the content of viable probiotic microorganisms and nevertheless have shelve life comparable to the shelve life of products which do not contain probiotics. They have less fat content than products containing full fat creams.

### Example

Various batches of cream were prepared using the following standard recipe:

| | |
|---|---|
| fat* | 358 g |
| water | 226 |
| dextrose | 170 |
| castor sugar | 170 |
| skimmed milk powder | 68 |
| salt | 1 |
| emulsifier** | 5 |

| | |
|---|---|
| *Centremelt or Crokcool: speciality fats marketed by Loders Croklaan, Wormerveer, The Netherlands. | |
| ** Admul 1401: polyglycerol fatty acid ester marketed by Quest International, Zwijndrecht, The Netherlands. | |

An O/W emulsion cream was prepared from these components by mixing all ingredients exept the fat with the water at ambient temperature, heating this mixture to 70°C while stirring and cooling to ambient again. This mixture was mixed with the plastic fat in a Hobart N-50 mixer until a homogeneous emulsion was obtained. Thereafter the probiotic microorganisms were added and flavour as desired. The mixture was aerated to the desired overrun in a Hobart N-50 mixer.

An W/O emulsion cream was prepared from these components by mixing the emulsifier with the fat at a temperature at which the fat is liquid. The other ingredients were mixed with the water as outlined above. Thereafter the liquid fat phase, the aqueous phase, flavour and the probiotic microorganisms were mixed together and treated in a votator type scraped heat exchanger till a homogeneous W/O emulsion was obtained as described in WO 95/24831. By injecting air in the votator during the mixing operation the cream was aerated to the desired overrun.
According to the general procedure outlined above four batches of the O/W cream and four batches of the W/O cream were prepared. Two of both were inoculated with Fargo 688* to a cell count of 1.1x10⁷CFU/g and stored at 7°C and 20°C respectively. The other batches were used as blanks, tested for contaminating microorganisms and stored at the same temperatures. After three months storage the blanks were still free of contaminating microorganisms. The batches stored at 7°C still had a cell count of more than 10⁷ CFU/g. In the O/W emulsion stored at 20°C the cell count was more than 10⁶ and in the W/O emulsion stored at 20°C the cell count was more than 10⁵ CFU/g.
**Enterococcus facium* strain PR88 according to EP-B-0 508 701, marketed by Quest International, Naarden, The Netherlands.

The examples above were repeated using creams inoculated with Fargo 606** and with Fargo 610***.
** *Lactobacillus acidophilus* marketed by Quest International, Naarden, The Netherlands.
*** *Bifidobacterium* marketed by Quest International, Naarden, The Netherlands.

## Claims

1. Confectionary cream comprising a fat phase and a water phase characterized in that it contains viable probiotic microorganisms.

2. Confectionary cream according to claim 2 characterized in that it has Aw between 0.50 ad 0.95, particularly between 0.55 and 0.90.

3. Confectionary cream according to claims 1 or 2 characterized in that it contains at least 10⁴ CFU/g of cream, preferably at least 10⁵ CFU/g.

4. Confectionary cream according to claims 1-3 characterized in that they contain 5-60% by weight of the total cream of water, 10-70% by weight of fat and at least 0.01% by weight of an emulsifier.

5. Confectionary cream according to claims 1-4 characterized in that they contain up to 60% of mono- and/or disaccharides and 5-40% of milk and/or yoghurt powder.

6. Confectionary cream according to claims 1-5 characterized in that the probiotic microorganisms belong to *L. acidophilus, L. bulgaricus, L. helveticus, L. casei, Streptococcus thermophilus, Bifidobacteria* and *Enterococcus faecium*.

7. Bakery product comprising a confectionary cream according claims 1-6.
